**Europäisches Patentamt**

**European Patent Office**

**Office européen des brevets**

(19)

(11) Publication number : **0 380 529 B1**

## (12) EUROPEAN PATENT SPECIFICATION

(45) Date of publication of patent specification :
**25.03.92 Bulletin 92/13**

(51) Int. Cl.⁵ : **H02G 3/06**

(21) Application number : **88908168.3**

(22) Date of filing : **01.09.88**

(86) International application number :
**PCT/DK88/00144**

(87) International publication number :
**WO 89/02179 09.03.89 Gazette 89/06**

(54) **TRAY FOR CABLES AND METHOD OF THE MANUFACTURING THEREOF.**

(30) Priority : **01.09.87 DK 4561/87**

(43) Date of publication of application :
**08.08.90 Bulletin 90/32**

(45) Publication of the grant of the patent :
**25.03.92 Bulletin 92/13**

(84) Designated Contracting States :
**AT BE CH DE FR GB IT LI LU NL SE**

(56) References cited :
**EP-A- 0 057 879**
**GB-A- 1 322 940**

(73) Proprietor : **RICH. MÜLLER A/S**
**Industriparken 40**
**DK-2750 Ballerup (DK)**

(72) Inventor : **Magnus, Elo Bogelund**
**Nebbegardsbakken 25**
**DK-2400 Copenhagen NV (DK)**

(74) Representative : **Raffnsoee, Knud Rosenstand**
**et al**
**Internationalt Patent-Bureau Hoeje Taastrup**
**Boulevard 23**
**DK-2630 Taastrup (DK)**

# Description

The invention relates to a tray for cables formed as a rectangular U-shape channel cross-section, upwardly open and folded over along its free longitudinal edges.

Tray elements for cable trays which by means of supporting brackets are secured to walls and serve to receive cables are manufactured in specific lengths and subsequently assembled into larger lengths on site of use.

Various supporting brackets or fixtures are used for the assembling and some of them necessitate using screws and corresponding tools while other brackets are mounted in some other way, but to all of them it applies that they must be available, i.e. manufactured, and that it takes time to mount them. Moreover, at least two brackets are required for each assembling. This is actually an expensive and time-consuming measure.

GB patent No. 1 322 940 deals with tray members for cables of the above mentioned type in which the individual tray members in the longitudinal direction have gradually decreasing dimensions so that the members may be assembled without the use of tools in that they are made to telescope, but it is a drawback that this manner does not provide for any gradual and smooth transition between the individual lengths of cable trays. Due to the gradually decreasing dimensions throughout the length, the prior tray members for cables are, moreover, complicated to manufacture and a manufacturing by sectional rolling that is the most economic method of manufacturing is not possible. It is a further complication in the manufacturing of the known tray for cables that the end section with reduced dimensions is obtained in that the free longitudinal edges are doubled over and at said end sections are squeezed further together so as to provide a shoulder serving as a stop.

From EP-A-0 057 879 a cable tray element is known which comprises approximately U-shaped profiled channel-shaped sections, for example of sheet steel, whose arms are flanged on their longitudinal edges and are bent at an angle by approximately the material thickness at a respective end portion in order to form a sleeve-shaped connection component, in which component the unbent end portion of a further section may be inserted and fastened in this position by fastening means.

This cable tray element necessitates the use of fastening means such as lugs. The assembling of the known tray elements necessitates the use of tools.

It is an object of the invention to provide a tray for cables designed in such a manner that the individual lengths of cable trays as offered on large-scale production may be adjoined straight away without the use of tools, screws or supporting brackets.

To obtain this, the tray element for cable trays according to the invention is characterized in that at its one end it has a minor portion of its length formed with reduced cross-sectional dimensions in relation to the remaining major portion of the length of the tray element, in that said remaining major portion of the tray element has constant cross-sectional dimensions and in that a bulb is provided at the bottom of the tray element in said minor portion, such that in use the one end with reduced cross-sectional dimensions of one tray element can be fitted into the other end of a like tray element.

Said design allows for adjoining the individual lengths of cable trays in an extremely simple manner, i.e. as in the above mentioned prior structure purely in that an end of a cable tray with reduced dimensions is pushed into an end of a cable tray with unchanged dimensions, actually in the same manner as tube pieces for a vacuum cleaner stick. Due to the fact that it is only an end section of the individual tray members that has reduced dimensions there are obtained quite gradual and smooth transitions at the joints. Moreover, the members are easily disassembled because there is no keying effect as may be expected from the structure disclosed in the above mentioned GB reference No. 1 322 940 owing to the conicity thereof. The bulb at the bottom of the tray allows for producing the tray by sectional steel rolling which is a substantially more economic method of manufacturing than turning-down or doubling-over which is required in the production of the above recited prior tray for cables.

Owing to the channel-shape, it is actually very difficult to impart to the one end of a cable tray of the type concerned the necessary decreasing dimensions. In a general press process that may be used for forming a tubular piece for a vacuum cleaner because it is circular, the sheet material of a cable tray will simply bulge out due to the open quadrangular channel-shape. The material is virtually unable to be upset.

In view of the above the invention also relates to a method of manufacturing the tray element for cable trays from an open channel-shaped profile with doubled-over free longitudinal edges, in which method a reduction of the cross-sectional dimensions is effected by folding down further the free longitudinal edges along a minor portion of the length at one end of the channel and in which according to the invention the lateral walls at said minor portion are squeezed towards each other and that a bulb is simultaneously provided at the bottom of the profile of the minor portion.

Due to the provision of the bulb at the bottom of the profile, the surplus material resulting from the squeezing of the side walls towards each other will be accommodated in a controlled manner, whereby arbitrary bulging of the sheet material will be avoided.

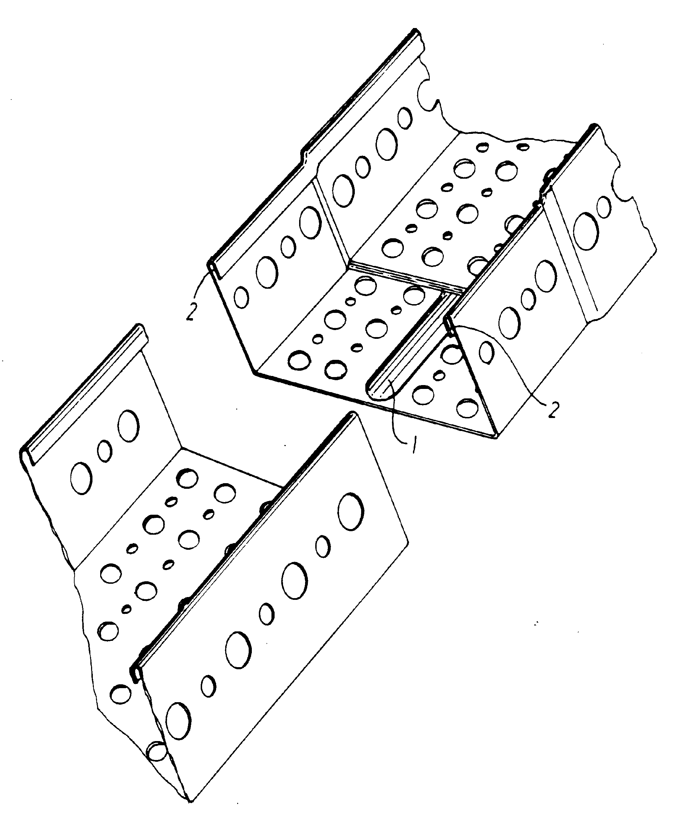

The invention will now be explained in detail with reference to the drawing illustrating two end sections of a tray for cables.

The figure illustrates on the right side thereof the end of the cable tray element with reduced dimensions. The bulb at the tray bottom is designated 1 and 2 designates the bendings turned further down and against the lateral walls of the tray element which thus become a little lower. By the assembling with the tray element illustrated on the left in the figure the foldings may then be inserted into the corresponding, but undeformed bendings of this tray element.

The extent of the reduction of dimensions is not particularly critical but it is most advantageous if the reduction corresponds as exactly as possible to the sheet thickness so as to obtain a reasonably tight fitting and thus a stable assembling.

The reduction proper of the dimensions may be effected by punching and it is necessary that the folding-down of the lateral edges 2, the pressing-in of the lateral walls and the pressing-up of bulb 1 are carried out in unison.

If it is desired to avoid waste because the cable tray elements do not always fit when having the length offered by the manufacturer and frequently have to be cut, two or more pieces of cable tray elements without any reduced end sections may be united into larger lengths by means of a joining channel element having reduced dimensions at both ends or being reduced throughout its length and then further comprising a central stop and which is inserted into the end portions of two cut pieces of cable tray element having the large dimensions.

## Claims

1. A tray element for cable trays formed as a rectangular U-shape channel cross-section, upwardly open and folded over along its free longitudinal edges, characterized in that at its one end it has a minor portion of its length formed with reduced cross-sectional dimensions in relation to the remaining major portion of the length of the tray element, in that said remaining major portion of the tray element has constant cross-sectional dimensions and in that a bulb is provided at the bottom of the tray element in said minor portion, such that in use the one end with reduced cross-sectional dimensions of tray element can be fitted into the other end of a like tray element.

2. A tray element for cable trays as claimed in claim 1, characterized in that the reduction of dimensions corresponds to the thickness of the sheet material from which the tray element is manufactured.

3. A method of manufacturing the tray element for cable trays as claimed in claim 1 or 2 from an open channel-shaped profile with doubled-over free longitudinal edges, in which method a reduction of the cross-sectional dimensions is effected by folding down further the free longitudinal edges along a minor portion of the length at one end of the channel, characterized in that the lateral walls at said minor portion are squeezed towards each other and that a bulb is simultaneously provided at the bottom of the profile of the minor portion.

## Patentansprüche

1. Rechteckiges Trägerelement für Kabelträger mit U-förmigen Kanalquerschnitt, das nach oben offen und entlang seiner freien Längskanten umgebogen ist, dadurch **gekennzeichnet,** dass an dem einen Ende ein kleinerer Teil von dessen Länge, im Verhältnis zu dem restlichen grösseren Teil der Länge des Trägerelements, reduziertes Querschnittsausmass aufweist, dass der restliche grössere Teil des Trägerelements gleichbleibende Masse besitzt, und dass in dem kleineren Teil im Boden des Trägerelements eine Wulst vorgesehen ist, sodass bei Gebrauch das eine Ende des Trägerelements mit rerduzierten Querschnittsmassen in das andere Ende eines ähnlichen Trägerelements hineingesteckt werden kann.

2. Trägerelement für Kabelträger nach Anspruch 1, dadurch **gekennzeichnet,** dass die Massreduzierung der Dicke des zur Herstellung des Trägerelements verwendeten Plattenmaterials entspricht.

3. Verfahren zur Herstellung des Trägerelements für Kabelträger nach Anspruch 1 oder 2, aus einem offenen, kanalförmigen Profil mit umgebogenen freien Längskanten, bei welchem Verfahren ein zusätzliches Umbiegen der freien Längskanten entlang eines kleineren Teils der Länge an einem Ende der Rinne eine Reduzierung der Querschnittsmasse bewirkt, dadurch **gekennzeichnet,** dass in dem kleineren Teil die Seitenwände gegeneinander gepresst werden und im Profilboden des kleineren Teils gleichzeitig eine Wulst erzeugt wird.

## Revendications

1. Elément de porte-câbles présentant la forme d'une gouttière rectangulaire, ouverte vers le haut et repliée le long de ses bords longitudinaux libres, caractérisé en ce qu'à l'une de ses extrémités et sur une moindre partie de sa longueur, il est conformé à des dimensions de coupe transversale réduites par rapport à la partie restante de sa longueur, en ce que ladite partie restante de l'élément de porte-câbles présente des dimensions de coupe transversale constantes, et en ce que dans ladite moindre partie, une protubérance est prévue dans le fond de l'élément, si bien que pour emploi l'extrémité de l'élément présentant des dimensions de coupe transversale réduites peut être insérée dans la seconde extrémité d'un élément porte-câble similaire.

2. Elément de porte-câbles selon la revendication 1, caractérisé en ce que ladite réduction de dimensions correspond à l'épaisseur du matériau en plaque, à partir duquel l'élément de porte-câbles a été manufacturé.

3. Procédé de fabrication de l'élément de porte-câbles selon les revendications 1 ou 2 à partir d'un profilé en gouttière ouverte et à bords longitudinaux repliés, procédé dans lequel une réduction de dimensions de coupe transversale est effectuée par repliage plus important des bords longitudinaux libres, le long d'une moindre partie de la longueur de la gouttière, caractérisé en ce que sur ladite moindre partie, les parois latérales sont pressées l'une vers l'autre et en ce que simultanément une protubérence est formée dans le fond de ladite moindre partie du profilé.